# FASCICULE DE BREVET EUROPEEN

(11) **EP 3 129 145 B1**
(45) Date de publication et mention de la délivrance du brevet: **14.03.2018**
(21) Numéro de dépôt: 15714834.7
(22) Date de dépôt: 09.04.2015
(51) Int. Cl.: B01L 3/02

(54) **SYSTÈME DE PIPETAGE MULTICANAUX COMPRENANT DEUX CHAMBRES D'ASPIRATION IMBRIQUÉES L'UNE DANS L'AUTRE**
MEHRKANAL-PIPETTIERSYSTEM MIT ZWEI ÜBERLAPPEND ANGEORDNETEN ASPIRATIONSKAMMERN
MULTICHANNEL PIPETTING SYSTEM COMPRISING TWO ASPIRATION CHAMBERS THAT ARE IMBRICATED IN ONE ANOTHER

(30) Priorité: 10.04.2014 FR 1453185
(43) Date de publication de la demande: 15.02.2017
(73) Titulaire: GILSON SAS, 95400 Villiers-le-Bel (FR)
(72) Inventeur: DUDEK, Bruno, F-60560 Montgresin (FR)
(74) Mandataire: Brevalex
(86) Numéro de dépôt international: PCT/EP2015/057788
(87) Numéro de publication internationale: WO 2015/155317

(56) Documents cités:
- JP-U- S6 243 634
- US-A- 2 826 339
- US-A- 5 970 806

## Description

### DOMAINE TECHNIQUE

La présente invention se rapporte au domaine des systèmes de pipetage multicanaux, telles que les pipettes de prélèvement multicanaux, également dénommées pipettes de laboratoire ou encore pipettes de transfert de liquide à déplacement d'air, destinées au prélèvement et à l'introduction calibrées de liquide dans des récipients.

L'invention s'applique de préférence aux pipettes de prélèvement destinées à être tenues en main par un opérateur durant les opérations de prélèvement et de dispense de liquide, mais s'applique également aux systèmes automatisés de pipetage.

### ETAT DE LA TECHNIQUE ANTERIEURE

De l'art antérieur (p. ex. US5970806), il est connu des pipettes de prélèvement multicanaux disposant d'une conception du type intégrant un corps formant poignée, ainsi qu'une partie basse présentant à son extrémité plusieurs embouts porte cône de prélèvement de pipette, dont la fonction connue est de porter des cônes de prélèvement, également dits consommables.

La partie basse comprend donc un corps fixe présentant à son extrémité inférieure une pluralité d'embouts porte cône de prélèvement, espacés les uns des autres selon une direction latérale de pipette, de manière à former une rangée. Chaque embout porte cône de prélèvement présente un orifice traversant communiquant avec une chambre d'aspiration.

Des pistons parallèles sont logés respectivement dans les chambres d'aspiration précitées, et montés à leur extrémité supérieure sur un porte-pistons mobile en translation par rapport au corps fixe. En effet, le porte-pistons est habituellement piloté par un équipage manuel ou motorisé lui imposant une course de remontée lors des phases de prélèvement de liquide, et une course de descente lors des phases de transfert du liquide, la course de remontée s'effectuant généralement sous l'effet de détente d'un ressort préalablement comprimé durant la course de descente précédente.

Lors de son mouvement, le porte-pistons entraîne avec lui les pistons qui lui sont raccordés, de sorte que ces derniers sont par conséquent capables d'être mis simultanément en mouvement selon une direction de coulissement, habituellement parallèle à l'axe central longitudinal de la pipette.

Il est rappelé que le volume prélevé dépend de la course du piston, et de la superficie de la section transversale de sa chambre d'aspiration associée. Aussi, lorsque le volume de liquide à prélever dans chaque cône est élevé, par exemple de l'ordre de 1200 µl, il est nécessaire d'augmenter l'un ou les deux paramètres précités. Cependant, une augmentation trop importante de la course du piston peut s'avérer problématique en termes d'ergonomie pour l'opérateur. En outre, une augmentation trop importante du diamètre du piston et de sa chambre d'aspiration peut générer des problèmes d'encombrement au niveau de la partie basse de la pipette. Ces problèmes d'encombrement peuvent devenir sévères au point de ne plus pouvoir respecter le pas entre les embouts porte cône de prélèvement, ce pas étant généralement dicté par le pas entre les différents réceptacles de liquide prévus sur une plaque de microtitration.

Dans l'art antérieur, des solutions ont été proposées pour résoudre les problèmes identifiés ci-dessus, comme l'agencement des pistons en quinconce, mais ces solutions ne donnent pas entièrement satisfaction et elles s'avèrent donc perfectibles.

Par ailleurs, des inconvénients analogues existent pour les systèmes automatisés de pipetage.

### EXPOSÉ DE L'INVENTION

L'invention a donc pour but de proposer une solution remédiant au moins partiellement aux problèmes mentionnés ci-dessus, rencontrés dans les solutions de l'art antérieur.

Pour ce faire, l'invention a tout d'abord pour objet un dispositif pour partie basse de système de pipetage multicanaux, comprenant deux embouts porte cône de prélèvement ainsi que deux chambres d'aspiration coopérant respectivement avec les deux embouts, les deux chambres d'aspiration étant concentriques.

En d'autres termes, l'invention rompt totalement avec la conception habituelle des systèmes de pipetage multicanaux, en agençant les deux chambres d'aspiration de façon coaxiale. Cette spécificité permet de réduire l'encombrement par rapport à une solution classique à chambres d'aspiration adjacentes. L'invention permet ainsi d'offrir un compromis très satisfaisant, puisque le système de pipetage multicanaux qui en découle peut présenter un encombrement réduit, une course de piston satisfaisante d'un point de vue ergonomique, un pas conventionnel entre les deux embouts, et ce même pour des volumes de prélèvement élevés.

En outre, le phénomène de dispersion, lié à des différentiels de déplacement des pistons coopérant avec les chambres d'aspiration, peut avantageusement être réduit avec la conception à chambres concentriques. Les efforts de frottement des pistons dans les chambres peuvent aussi être potentiellement diminués. Enfin, la solution fournie par l'invention reste facilement implantable sur les systèmes de pipetage multicanaux existants.

Selon un premier mode de réalisation préféré de l'invention, le dispositif comprend deux pistons coopérant respectivement avec lesdits deux chambres d'aspiration, les deux pistons étant imbriqués l'un dans autre.

Les deux pistons sont solidaires en translation, selon leur direction de coulissement dans les chambres d'aspiration. Par exemple, ils sont réalisés d'un seul tenant.

Les deux chambres d'aspiration sont agencées l'une autour de l'autre, même s'il pourrait en être autrement, sans sortir du cadre de l'invention. En effet, alternativement, les deux chambres peuvent être décalées axialement l'une de l'autre sans se recouvrir, toujours en restant concentriques, donc avec l'une située extérieurement par rapport à l'autre.

Une première des deux chambres d'aspiration présente une section transversale pleine, et une seconde des deux chambres présente une section transversale évidée. De préférence, même si les formes peuvent différer, il est prévu que la première chambre d'aspiration présente une section transversale sensiblement en forme de disque, et que la seconde chambre d'aspiration présente une section transversale de forme sensiblement annulaire. Alternativement, à la place d'une forme de disque pour la première chambre d'aspiration, il pourrait être retenu une forme ovale ou toute autre forme analogue. Il est noté que les pistons présentent des formes complémentaires des celles de leurs chambres d'aspiration associées.

Selon un second mode de réalisation préféré envisagé, le dispositif comprend une première chambre d'aspiration et une seconde chambre d'aspiration, ainsi qu'un premier et un second pistons coopérant respectivement avec lesdites chambres d'aspiration, ladite seconde chambre d'aspiration présentant une section transversale de forme sensiblement annulaire et étant définie entre un corps intérieur et un corps extérieur, ledit second piston logé dans la seconde chambre se présentant sous la forme générale d'un anneau obturé à l'une de ses extrémités axiales par un obturateur formant ledit premier piston, ladite première chambre d'aspiration étant délimitée axialement entre l'obturateur et une extrémité axiale dudit corps intérieur, et délimitée latéralement par le second piston.

Ce second mode de réalisation présente l'avantage d'une fabrication plus simple à réaliser.

Quel que soit le mode de réalisation préféré envisagé, l'invention présente au moins l'une des caractéristiques optionnelles suivantes, prises isolément ou en combinaison.

Les axes centraux des deux embouts sont espacés l'un de l'autre selon un pas de 9 mm, traditionnellement rencontré sur les plaques de microtitration.

Les deux embouts sont chacun équipé d'un orifice traversant, centré ou non relativement à son embout associé. La possibilité de décentrer ces orifices traversants offre un degré de liberté supplémentaire pour la conception du dispositif, favorisant la diminution de son encombrement.

Les deux chambres d'aspiration présentent respectivement, en section transversale, des superficies identiques ou différentes. Lorsque les superficies diffèrent, les chambres d'aspiration permettent d'effectuer des prélèvements de valeurs différentes, dits prélèvements multivolume. Cette opportunité est par exemple particulièrement intéressante pour effectuer des opérations de dosage.

Le dispositif est préférentiellement équipé de seulement deux embouts. Néanmoins, un nombre N d'embouts avec N supérieur ou égal à 3 reste possible. Dans ce cas de figure, seule la chambre d'aspiration la plus intérieure présente une section pleine, les autres étant préférentiellement évidées, imbriquées les unes dans les autres. De plus, les N embouts sont alors de préférence alignés pour former une rangée, même si d'autres configurations pourraient être retenues, sans sortir du cadre de l'invention.

L'invention a également pour objet une partie basse d'un système de pipetage multicanaux, comprenant au moins un dispositif tel que décrit ci-dessus, et de préférence une pluralité de ces dispositifs.

De préférence, les dispositifs sont agencés de telle sorte que l'axe central de chaque embout de la partie basse intercepte une même droite, de manière à former une rangée d'embouts. De préférence, les dispositifs sont alignés selon cette droite, ou éventuellement agencés en quinconce. Alternativement, pour former N rangées d'embouts avec N correspondant au nombre d'embouts par dispositif, ces mêmes dispositifs peuvent alors être alignés selon une direction orthogonale à une direction d'espacement entre les embouts d'un même dispositif.

De préférence, en section transversale, au moins l'une des chambres d'aspiration de l'un des dispositifs présente une superficie différente de celle d'au moins l'une des chambres d'aspiration d'au moins un autre dispositif équipant la partie basse. Ici encore, cette particularité permet de réaliser des prélèvements multivolume.

Enfin, l'invention a pour objet un système de pipetage multicanaux comprenant une partie basse telle que décrite ci-dessus, ledit système étant préférentiellement une pipette de prélèvement, manuelle ou motorisée. Alternativement, il peut s'agir d'un système automatisé de pipetage.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue de face d'une pipette de prélèvement multicanaux à déplacement d'air, selon un mode de réalisation préféré de l'invention ;
- la figure 2 représente une vue partielle et agrandie de la partie basse de la pipette montrée sur la figure précédente ;
- la figure 3 représente une vue agrandie, en coupe longitudinale, d'un dispositif spécifique à l'invention, équipant la partie basse de la pipette, ledit dispositif se présentant sous la forme d'un premier mode de réalisation préféré de l'invention ;
- la figure 4 est une vue en coupe prise le long de la ligne IV-IV de la figure 3 ;
- la figure 5 est une vue éclatée en perspective du dispositif montré sur les figures 3 et 4 ;
- la figure 6 représente une vue en perspective de la partie fixe du dispositif montré sur les figures 3 à 5, selon un autre angle de vue ;
- la figure 7 représente une vue en coupe prise le long de la ligne VII-VII de la figure 2 ;
- la figure 8 représente une vue similaire à celle de la figure 3, avec le dispositif se présentant sous la forme d'un second mode de réalisation préféré de l'invention ;
- la figure 9 est une vue en coupe prise le long de la ligne IX-IX de la figure 8 ; et
- la figure 10 est une vue éclatée en perspective du dispositif montré sur les figures 8 et 9.

### EXPOSÉ DÉTAILLÉ DE MODES DE RÉALISATION PRÉFÉRÉS

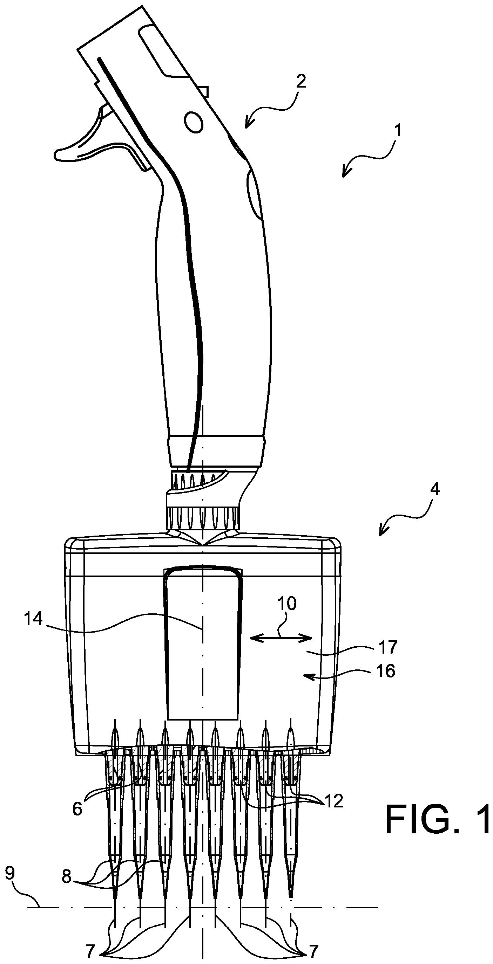

En référence tout d'abord à la figure 1, il est représenté une pipette de prélèvement multicanaux 1, selon un mode de réalisation préféré de la présente invention. Néanmoins, l'invention n'est pas limitée aux pipettes, mais s'applique à tout système de pipetage multicanaux, et notamment aux systèmes automatisés de pipetage, dits automates.

La pipette 1 à déplacement d'air, manuelle ou motorisée, comprend en partie supérieure un corps formant poignée 2, ainsi qu'une partie basse 4 également objet de la présente invention, intégrant à son extrémité inférieure des embouts porte cône de prélèvement de pipette 6, sur lesquels des cônes ou consommables 8 sont destinés à être emmanchés.

Les embouts porte cône de prélèvement 6 sont espacés les uns des autres selon une direction latérale du système de pipetage, ou encore direction latérale de pipette, représentée par la flèche 10. Chaque embout 6 présente un orifice traversant 12 communiquant à son extrémité supérieure avec une chambre d'aspiration (non visible sur la figure 1), et à son extrémité inférieure avec un cône de prélèvement 8. L'orifice traversant 12 est centré ou non sur son embout 6 associé, c'est-à-dire qu'il est ou non centré sur un axe central 7 de l'embout sur lequel est centré le cône emmanché.

La pipette 1 présente un axe central longitudinal 14, correspondant également à un axe central longitudinal de la partie basse 4. Cet axe 14 est orthogonal à la direction latérale 10, et habituellement placé de manière à avoir un nombre identique d'embouts 6 disposés de part et d'autre de celui-ci, dans la direction latérale. En outre, généralement, l'axe 14 est parallèle aux axes des orifices traversants 12 et aux axes 7 de leurs cônes associés 8, et également parallèle à une direction de coulissement des éléments mobiles de la partie basse de pipette 4, qui seront décrits ci-après.

Dans l'exemple montré sur la figure 1, il est prévu huit embouts 6 alignés selon la direction 10, de manière à former une rangée. Aussi, l'axe central 7 de chaque embout 6 intercepte une même droite 9 s'étendant selon la direction 10.

Comme cela est connu de l'homme du métier, la partie basse 4 est préférentiellement montée de façon vissée sur le corps 2 formant poignée.

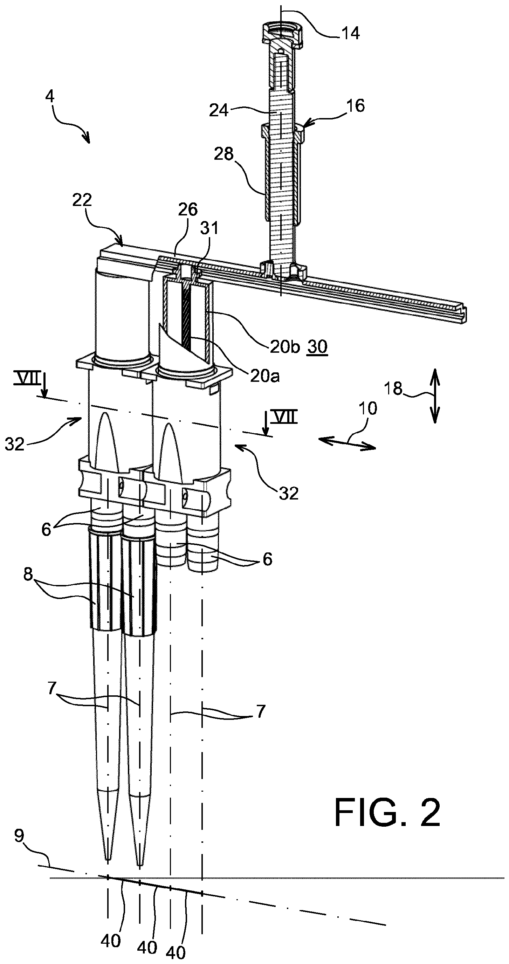

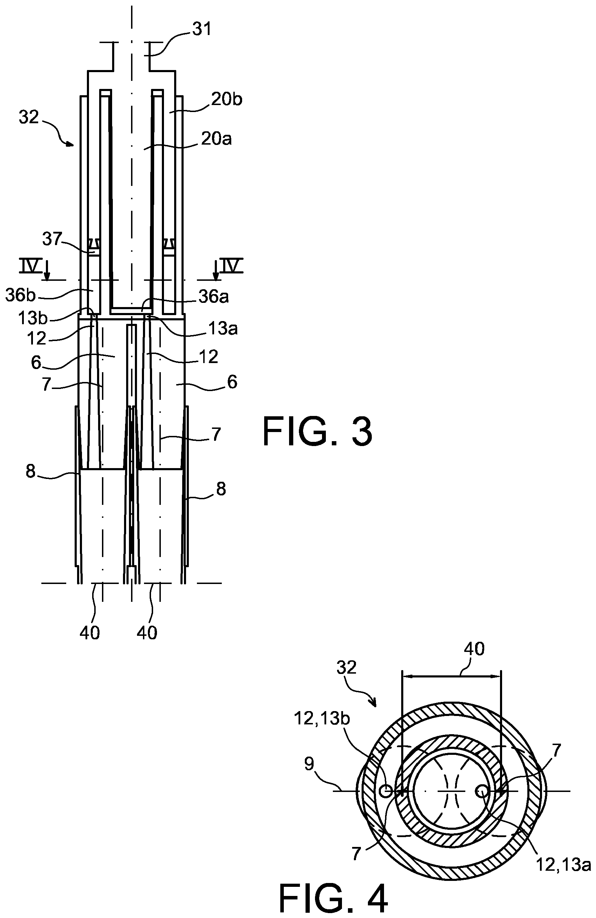

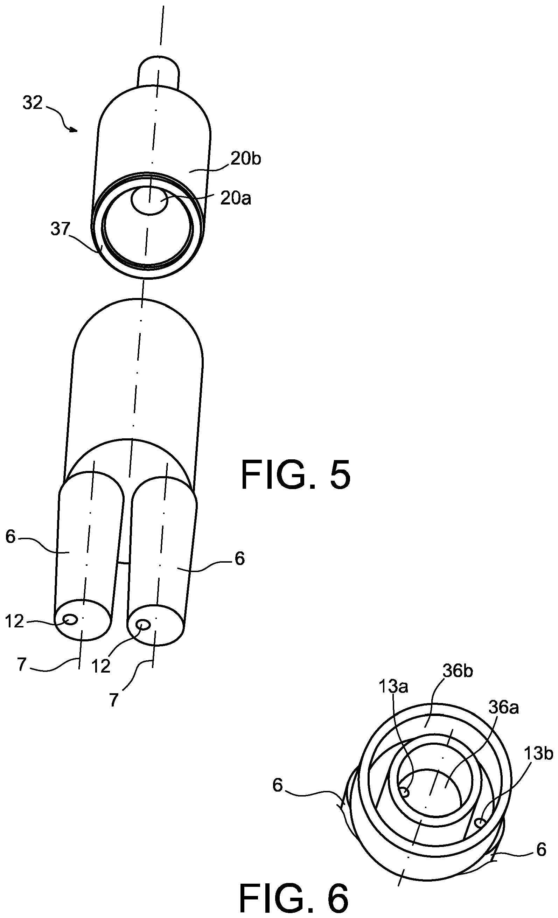

L'une des particularités de l'invention réside dans la conception de la partie basse 4, qui va tout d'abord être détaillée en référence aux figures 2 à 7 représentant un premier mode de réalisation préféré.

De manière connue, la partie basse 4 comprend un corps fixe 16, ainsi qu'un ensemble mobile par rapport à ce corps fixe, selon une direction de coulissement 18 parallèle à l'axe 14 et orthogonale à la direction latérale 10. L'ensemble mobile présente tout d'abord une pluralité de pistons 20a, 20b parallèles à la direction 18, et chacun associé à un embout 6.

L'ensemble mobile présente également un porte-pistons 22 situé globalement au-dessus des pistons 20a, 20b, ce porte-pistons comprenant une tige de guidage 24 centrée sur l'axe 14, ainsi qu'une tête de support des pistons 26 solidaire d'une extrémité basse de la tige 24. La tête 26, agencée parallèlement à la direction latérale 10, donc orthogonalement à la direction de coulissement 18 ainsi qu'à l'axe 14, prend la forme d'un râteau logeant une extrémité supérieure 31 des pistons entre ses dents. De façon plus précise, les extrémités supérieures de piston sont bloquées en translation par le râteau dans les deux sens de la direction de coulissement 18, afin de pouvoir suivre le mouvement de va-et-vient du porte-pistons selon cette même direction.

Le corps fixe 16 de la partie basse de pipette est réalisé à l'aide de plusieurs éléments solidaires les uns des autres, rapportés ou fabriqués d'un seul tenant. Il s'agit tout d'abord d'un cylindre de guidage 28 centré sur l'axe 14 et logeant à coulissement la tige 24 du porte-pistons mobile. De plus, une structure 30 agencée au-dessous du cylindre 28 est prévue pour délimiter un espace de coulissement de la tête de support 26, cette structure étant sensiblement orientée selon un plan parallèle aux directions 10 et 18. Comme cela est montré sur la figure 1, un capot amovible extérieur 17 vient compléter le corps fixe 16, ce capot venant globalement recouvrir la structure 30 et les dispositifs 32 qui seront décrits ci-dessous, de sorte que seule une partie inférieure des embouts 6 soit en saillie en dehors de ce capot.

La partie basse 4 comporte en effet une pluralité de dispositifs individuels 32, spécifiques à la présente invention. Il s'agit ici de quatre dispositifs alignés selon la droite 9. Chacun de ces dispositifs 32 définit deux embouts 6, également écartés l'un de l'autre selon la droite 9 et la direction 10. Les parties fixes de ces dispositifs 32 peuvent être indépendantes les unes des autres et rapportées sur le corps fixe 16 de la partie basse, ou bien réalisées d'une seule pièce rapportée sur cette même partie fixe. Les deux embouts 6 sont rapportés sur les autres parties fixes du dispositif 32.

Chaque dispositif 32 définit avec sa portion fixe supérieure deux chambres d'aspiration 36a, 36b concentriques, la chambre intérieure 36a étant entourée par la chambre extérieure 36b. A cet égard, il est noté que les deux chambres d'aspiration imbriquées 36a, 36b se recouvrent axialement sur au moins une portion axiale de celles-ci, mais pas nécessairement sur toute leurs longueurs axiales.

La chambre d'aspiration intérieure 36a, ou première chambre, présente une section transversale sensiblement en forme de disque, tandis que la chambre d'aspiration extérieure 36b, ou seconde chambre 36b, présente une section transversale de forme sensiblement annulaire. En sections transversales, les deux chambres 36a, 36b présentent des superficies identiques pour obtenir un même volume de prélèvement, ou bien des superficies différentes afin d'effectuer des prélèvements multivolume. A cet égard, il est indiqué que cette possibilité de volumes différents est possible entre les deux chambres d'un même dispositif 32, mais également entre divers dispositifs. Pour ce faire, il est prévu qu'au moins l'une des chambres d'aspiration 36a, 36b de l'un des dispositifs 32 présente une superficie différente de celle d'au moins l'une des chambres d'aspiration 36a, 36b d'au moins un autre dispositif 32 de la partie basse.

Chaque chambre 36a, 36b loge à coulissement un piston 20a, 20b, respectivement. Aussi, le dispositif 32 comporte deux pistons 20a, 20b de formes complémentaires de celles de leurs chambres respectives, de sorte que le piston intérieur 20a prend la forme d'un cylindre, et le piston extérieur 20b celle d'un anneau. Les deux pistons 20a, 20b sont de préférence réalisés d'une seule pièce, et rattachés au râteau 26 par le même connecteur mécanique 31, de préférence intégré à la pièce d'un seul tenant. Les deux pistons 20a, 20b sont ainsi imbriqués l'un dans l'autre.

L'étanchéité des deux chambres 36a, 36b est par exemple obtenue un plaçant un joint torique 37 au niveau de l'extrémité distale du second piston 20b, en regard du fond de la chambre d'aspiration 36b. C'est d'ailleurs au niveau de ce fond de chambre qu'est prévu un orifice 13b permettant la communication d'air avec l'orifice 12 de l'embout, et donc permettant la communication d'air avec le cône 8. Il en est de même avec le fond de la chambre intérieure 36a, grâce à la réalisation d'un orifice 13a.

En agençant de manière concentrique les chambres d'aspiration 36a, 36b, ainsi que les pistons associés, il est possible de réduire l'encombrement de la partie basse, et de respecter un pas 40 convenable entre les axes centraux des embouts. Ce pas 40 peut non seulement être respecté entre les deux embouts 6 d'un même dispositif 32, mais également entre les embouts 6 en regard deux à deux, appartenant à des dispositifs adjacents. La partie haute des dispositifs 32 présente en effet un encombrement latéral, selon la direction 10, qui est inférieur à l'encombrement cumulé des deux embouts 6. A titre d'exemple indicatif, avec un pas 40 fixé à 9 mm, chaque chambre 36a, 36b peut présenter une section de superficie de l'ordre de 75 mm², avec une course de pipetage du piston fixée à 16 mm. Cela permet de prélever des échantillons de liquide de volume important, tout en présentant un encombrement réduit et une ergonomie satisfaisante. En particulier, le diamètre extérieur de la chambre 36b peut être sensiblement inférieur à deux fois la valeur du pas 40 de 9 mm, puisqu'il est de l'ordre de 14,6 mm.

De manière connue, la tige de guidage 24 du porte-pistons 22 est pilotée par un équipage manuel ou motorisé lui imposant une course de remontée lors des phases de prélèvement de liquide, et une course de descente lors des phases de transfert du liquide. La course de remontée s'effectue généralement, en mode manuel, sous l'effet de détente d'un ressort préalablement comprimé durant la course de descente précédente. Lors de son mouvement, le porte-pistons 22 entraîne avec lui les pistons 20a, 20b solidaires du râteau 26, de sorte que ces derniers sont par conséquent capables d'être mis simultanément en mouvement selon la direction de coulissement 18. La course de remontée imposée à l'ensemble mobile par rapport au corps fixe 16 détermine le volume de liquide prélevé, volume qui est d'ailleurs préalablement réglé par l'utilisateur, au moyen par exemple d'une molette, d'une vis de réglage, ou encore d'un clavier numérique.

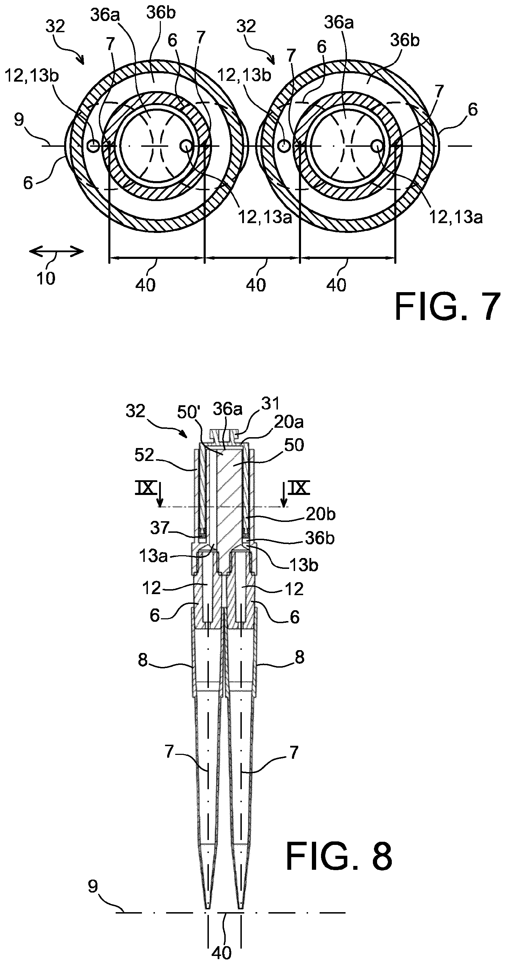

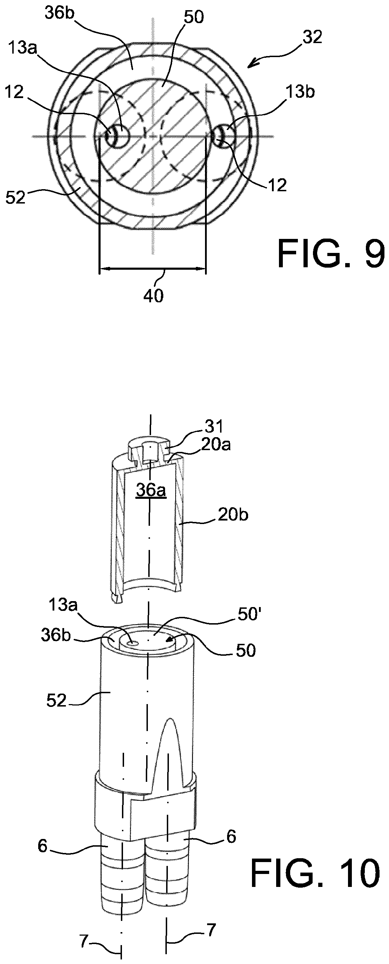

En référence à présent aux figures 8 à 10, il est représenté un dispositif 32 selon un second mode de réalisation préféré de l'invention, qui se caractérise par une fabrication simplifiée. Le second mode présente de nombreuses similitudes avec le premier mode décrit ci-dessus. Aussi, sur les figures, les éléments portant les mêmes références numériques correspondent à des éléments identiques ou similaires.

Dans ce second mode de réalisation préféré, la principale différence avec le premier mode réside dans la conception du premier piston 20a.

En effet, le second piston 20b reste identique à celui décrit précédemment, en étant logé dans la chambre 36b dont la section transversale est de forme sensiblement annulaire, en étant définie entre un corps intérieur 50 et un corps extérieur 52 de la partie fixe supérieure de ce dispositif 32. Le corps intérieur 50 est cylindrique de section en forme de disque, tandis que le corps extérieur 52, agencé autour et à distance du corps intérieur 50, est de section transversale sensiblement annulaire.

Le second piston 20b logé dans la seconde chambre 36b conserve donc sa forme générale d'anneau, obturé à son extrémité axiale haute par un obturateur. L'une des particularités de ce second mode de réalisation réside dans le fait que cet obturateur, en forme de disque et disposé sensiblement orthogonalement aux axes 7, constitue le premier piston 20a.

Les deux pistons 20a, 20b restent ainsi concentriques, toute en étant placés l'un au-dessus de l'autre. Avec cet agencement, la première chambre d'aspiration 36a est délimitée axialement entre l'obturateur 20a et l'extrémité axiale haute 50' du corps intérieur 50, et délimitée latéralement par la surface intérieure du second piston 20b. En fonctionnement, la paroi latérale de la seconde chambre 36b présente donc la particularité d'être mobile, car elle est constituée par le second piston 20b. Les deux chambres 36a, 36b restent elles aussi concentriques, toute en étant agencées l'une au-dessus de l'autre.

Le corps intérieur 50 est percé d'un orifice 13a qui débouche dans le fond de la chambre 36a, au niveau de l'extrémité axiale haute 50'. Il s'étend, de façon centrée ou non, à travers l'ensemble du corps intérieur 50, pour déboucher dans l'orifice 12 de l'embout associé 6. De la même manière, l'orifice 13b assure la communication d'air entre la chambre annulaire 36b et l'orifice 12 de l'embout associé 6.

Bien entendu, diverses modifications peuvent être apportées par l'homme du métier à l'invention qui vient d'être décrite, uniquement à titre d'exemples non limitatifs.

## Revendications

1. Dispositif (32) pour partie basse (4) de système de pipetage multicanaux, comprenant deux embouts porte cône de prélèvement (6) ainsi que deux chambres d'aspiration (36a, 36b) coopérant respectivement avec les deux embouts, **caractérisé en ce que** les deux chambres d'aspiration (36a, 36b) sont concentriques.

2. Dispositif selon la revendication 1, **caractérisé en ce qu'**il comprend deux pistons (20a, 20b) coopérant respectivement avec lesdits deux chambres d'aspiration (36a, 36b), les deux pistons étant imbriqués l'un dans autre.

3. Dispositif selon la revendication 2, **caractérisé en ce que** les deux pistons (20a, 20b) sont solidaires en translation, selon leur direction de coulissement (18) dans les chambres d'aspiration (36a, 36b).

4. Dispositif selon la revendication 2 ou la revendication 3, **caractérisé en ce que** les deux chambres d'aspiration (36a, 36b) sont agencées l'une autour de l'autre.

5. Dispositif selon l'une quelconque des revendications 2 à 4, **caractérisé en ce qu'**une première des deux chambres d'aspiration (36a) présente une section transversale pleine, et **en ce qu'**une seconde des deux chambres (36b) présente une section transversale évidée.

6. Dispositif selon la revendication 5, **caractérisé en ce que** la première chambre d'aspiration (36a) présente une section transversale sensiblement en forme de disque, et **en ce que** la seconde chambre d'aspiration (36b) présente une section transversale de forme sensiblement annulaire.

7. Dispositif selon la revendication 1, **caractérisé en ce qu'**il comprend une première chambre d'aspiration (36a) et une seconde chambre d'aspiration (36b), ainsi qu'un premier et un second pistons (20a, 20b) coopérant respectivement avec lesdites chambres d'aspiration (36a, 36b), ladite seconde chambre d'aspiration (36b) présentant une section transversale de forme sensiblement annulaire et étant définie entre un corps intérieur (50) et un corps extérieur (52), ledit second piston (20b) logé dans la seconde chambre (36b) se présentant sous la forme générale d'un anneau obturé à l'une de ses extrémités axiales par un obturateur formant ledit premier piston (20a), ladite première chambre d'aspiration (36a) étant délimitée axialement entre l'obturateur et une extrémité axiale (50') dudit corps intérieur (50), et délimitée latéralement par le second piston (20b).

8. Dispositif selon l'une quelconque des revendications précédentes, **caractérisé en ce que** les axes centraux (7) des deux embouts (6) sont espacés l'un de l'autre selon un pas de 9 mm.

9. Dispositif selon l'une quelconque des revendications précédentes, **caractérisé en ce que** les deux embouts (6) sont chacun équipé d'un orifice traversant (12), centré ou non relativement à son embout associé.

10. Dispositif selon l'une quelconque des revendications précédentes, **caractérisé en ce que** les deux chambres d'aspiration (36a, 36b) présentent respectivement, en section transversale, des superficies identiques ou différentes.

11. Dispositif selon l'une quelconque des revendications précédentes, **caractérisé en ce qu'**il est équipé de seulement deux embouts (6).

12. Partie basse d'un système de pipetage multicanaux, comprenant au moins un dispositif (32) selon l'une quelconque des revendications précédentes, et de préférence une pluralité de dispositifs (32) selon l'une quelconque des revendications précédentes.

13. Partie basse selon la revendication 12, **caractérisée en ce que** les dispositifs (32) sont agencés de telle sorte que l'axe central (7) de chaque embout (6) de la partie basse intercepte une même droite (9), de manière à former une rangée d'embouts.

14. Partie basse selon l'une quelconque des revendications 12 et 13, **caractérisée en ce qu'**en section transversale, au moins l'une des chambres d'aspiration (36a, 36b) de l'un des dispositifs (32) présente une superficie différente de celle d'au moins l'une des chambres d'aspiration (36a, 36b) d'au moins un autre dispositif (32) équipant la partie basse (4).

15. Système de pipetage multicanaux (1) comprenant une partie basse (4) selon l'une quelconque des revendications 12 à 14, ledit système étant préférentiellement une pipette de prélèvement, manuelle ou motorisée.

## Patentansprüche

1. Vorrichtung (32) für einen unteren Teil (4) eines Mehrkanal-Pipettiersystems, umfassend zwei Endstücke (6) zum Tragen eines Entnahmekonus sowie zwei Aspirationskammern (36a, 36b), die jeweils mit den zwei Endstücken zusammenwirken, **dadurch gekennzeichnet, dass** die zwei Aspirationskammern (36a, 36b) konzentrisch sind.

2. Vorrichtung nach Anspruch 1, **dadurch gekennzeichnet, dass** sie zwei Kolben (20a, 20b) umfasst, die jeweils mit den zwei Aspirationskammern (36a, 36b) zusammenwirken, wobei die zwei Kolben überlappend angeordnet sind.

3. Vorrichtung nach Anspruch 2, **dadurch gekennzeichnet, dass** die zwei Kolben (20a, 20b) entlang ihrer Gleitrichtung (18) in den Aspirationskammern (36a, 36b) translatorisch fest verbunden sind.

4. Vorrichtung nach Anspruch 2 oder 3, **dadurch gekennzeichnet, dass** die zwei Aspirationskammern (36a, 36b) umeinander herum angeordnet sind.

5. Vorrichtung nach einem der Ansprüche 2 bis 4, **dadurch gekennzeichnet, dass** eine erste der zwei Aspirationskammern (36a) einen vollen Querschnitt aufweist, und dadurch, dass eine zweite der zwei Aspirationskammern (36b) einen ausgesparten Querschnitt aufweist.

6. Vorrichtung nach Anspruch 5, **dadurch gekennzeichnet, dass** die erste Aspirationskammer (36a) einen im Wesentlichen scheibenförmigen Querschnitt aufweist, und dadurch, dass die zweite Aspirationskammer (36b) einen im Wesentlichen ringförmigen Querschnitt aufweist.

7. Vorrichtung nach Anspruch 1, **dadurch gekennzeichnet, dass** sie eine erste Aspirationskammer (36a) und eine zweite Aspirationskammer (36b) sowie einen ersten und einen zweiten Kolben (20a, 20b), die jeweils mit den Aspirationskammern (36a, 36b) zusammenwirken, umfasst, wobei die zweite Aspirationskammer (36b) einen im Wesentlichen ringförmigen Querschnitt aufweist und zwischen einem Innenkörper (50) und einem Außenkörper (52) definiert ist, wobei der zweite Kolben (20b), der in der zweiten Kammer (36b) aufgenommen ist, in der allgemeinen Form eines Rings vorliegt, der an einem seiner axialen Enden von einem Verschlussteil verschlossen ist, das den ersten Kolben (20a) bildet, wobei die erste Aspirationskammer (36a) zwischen dem Verschlussteil und einem axialen Ende (50') des Innenkörpers (50) axial begrenzt ist und von dem zweiten Kolben (20b) seitlich begrenzt ist.

8. Vorrichtung nach einem der vorhergehenden Ansprüche, **dadurch gekennzeichnet, dass** die Mittelachsen (7) der zwei Endstücke (6) in einem Abstand von 9 mm voneinander angeordnet sind.

9. Vorrichtung nach einem der vorhergehenden Ansprüche, **dadurch gekennzeichnet, dass** die zwei Endstücke (6) jeweils mit einer Durchgangsöffnung (12) versehen sind, die bezogen auf ihr zugehöriges Endstück zentriert ist oder nicht.

10. Vorrichtung nach einem der vorhergehenden Ansprüche, **dadurch gekennzeichnet, dass** die zwei Aspirationskammern (36a, 36b) jeweils im Querschnitt identische oder unterschiedliche Flächen aufweisen.

11. Vorrichtung nach einem der vorhergehenden Ansprüche, **dadurch gekennzeichnet, dass** sie nur mit zwei Endstücken (6) versehen ist.

12. Unterer Teil eines Mehrkanal-Pipettiersystems, umfassend mindestens eine Vorrichtung (32) nach einem der vorhergehenden Ansprüche und vorzugsweise mehrere Vorrichtungen (32) nach einem der vorhergehenden Ansprüche.

13. Unterer Teil nach Anspruch 12, **dadurch gekennzeichnet, dass** die Vorrichtungen (32) derart angeordnet sind, dass die Mittelachse (7) jedes Endstücks (6) des unteren Teils eine selbe Gerade (9) abfängt, so dass eine Reihe von Endstücken gebildet wird.

14. Unterer Teil nach einem der Ansprüche 12 und 13, **dadurch gekennzeichnet, dass** im Querschnitt mindestens eine der Aspirationskammern (36a, 36b) einer der Vorrichtungen (32) eine Fläche aufweist, die sich von derjenigen von zumindest einer der Aspirationskammern (36a, 36b) mindestens einer anderen Vorrichtung (32), die in den unteren Teil (4) eingebracht ist, unterscheidet.

15. Mehrkanal-Pipettiersystem (1), umfassend einen unteren Teil (4) nach einem der vorhergehenden Ansprüche 12 bis 14, wobei das System vorzugsweise eine manuelle oder angetriebene Entnahmepipette ist.

## Claims

1. A device (32) for the bottom part (4) of a multichannel pipetting system, comprising two sampling-cone-holding end pieces (6) as well as two aspiration chambers (36a, 36b) respectively engaging with both end pieces, **characterised in that** both aspiration chambers (36a, 36b) are concentric.

2. The device according to claim 1, **characterised in that** it comprises two pistons (20a, 20b) respectively engaging with said two aspiration chambers (36a, 36b), both pistons being imbricated in one another.

3. The device according to claim 2, **characterised in that** both pistons (20a, 20b) are translationally secured, along their sliding direction (18) in the aspiration chambers (36a, 36b).

4. The device according to claim 2 or claim 3, **characterised in that** both aspiration chambers (36a, 36b) are arranged one around the other.

5. The device according to any of claims 2 to 4, **characterised in that** a first of both aspiration chambers (36a) has a solid transverse cross-section, and **in that** a second of both chambers (36b) has a recessed transverse cross-section.

6. The device according to claim 5, **characterised in that** the first aspiration chamber (36a) has a substantially disc-shaped transverse cross-section, and **in that** the second aspiration chamber (36b) has a substantially annular shaped transverse cross-section.

7. The device according to claim 1, **characterised in that** it comprises a first aspiration chamber (36a) and a second aspiration chamber (36b), as well as first and a second pistons (20a, 20b) respectively engaging with said aspiration chambers (36a, 36b), said second aspiration chamber (36b) having a substantially annular shaped transverse cross-section and being defined between an internal body (50) and an external body (52), said second piston (20b) being accommodated in the second chamber (36b) being generally in the form of a sealed ring at one of its axial ends by a seal forming said first piston (20a), said first aspiration chamber (36a) being axially delimited between the seal and an axial end (50') of said internal body (50), and laterally delimited by the second piston (20b).

8. The device according to any of the preceding claims, **characterised in that** the centre axes (7) of both end pieces (6) are spaced apart from each other with a pitch of 9mm.

9. The device according to any of the preceding claims, **characterised in that** both end pieces (6) are each equipped with a through port (12), being centred or not relative to its associated end piece.

10. The device according to any of the preceding claims, **characterised in that** both aspiration chambers (36a, 36b) have respectively, in a transverse cross-section, identical or different surface areas.

11. The device according to any of the preceding claims, **characterised in that** it is equipped with only two end pieces (6).

12. A bottom part of a multichannel pipetting system, comprising at least one device (32) according to any of the preceding claims, and preferably a plurality of devices (32) according to any of the preceding claims.

13. The bottom part according to claim 12, **characterised in that** the devices (32) are arranged such that the centre axis (7) of each end piece (6) of the bottom part intercepts a same straight line (9), so as to form a row of end pieces.

14. The bottom part according to any of claims 12 and 13, **characterised in that** in a transverse cross-section, at least one of the aspiration chambers (36a, 36b) of one of the devices (32) has a different surface area from that of at least one of the aspiration chambers (36a, 36b) of at least one other device (32) equipping the bottom part (4).

15. A multichannel pipetting system (1) comprising a bottom part (4) according to any of claims 12 to 14, said system being preferentially a manual or motorised sampling pipette.
